# EUROPEAN PATENT APPLICATION

(11) **EP 2 373 017 A2**
(43) Date of publication of application: **05.10.2011**
(21) Application number: 09836292.4
(22) Date of filing: 13.11.2009
(51) Int. Cl.: H04N 7/167, H04N 7/015

(54) **BROADCAST TRANSCEIVER AND PCMCIA SCRAMBLER WITH RECEPTION LIMITATION FUNCTION IMPLEMENTED BY USING DVB-CI INTERFACE**

(30) Priority: 29.12.2008 KR 20080136021
(71) Applicant: Xcrypt, Inc., Seoul 121-270 (KR)
(72) Inventor: KIM, Giseop, Goyang-si Gyeonggi-do 411-803 (KR)
(74) Representative: von Kreisler Selting Werner
(86) International application number: PCT/KR2009/006661
(87) International publication number: WO 2010/076971

(57) **Abstract**

The present invention relates to a broadcast transceiver with conditional access function implemented by using simple PCMCIA module and comprises: a demodulator which demodulates the input broadcast signal a PCMCIA scrambler module of DVB-CI standard which is inserted in a CI interface slot and scrambles at least a part of broadcast signal in a MPEG2 transport stream in the demodulated broadcast signal; a modulator which modulates the scrambled broadcast signal.

Additionally, the invention provides a PCMCIA scrambler comprising: a control word generator that generates a CW required for scrambling; a scrambler that scrambles TS (Transport Stream) using the CW; a control CPU that receives and processes the configuration information which prescribes the conditional access information concerning each channel, an encryption engine and table generator that encrypts the CW and also generates a table for each broadcast signal according to the configuration information and encrypted CW; a packet modifier that adds generated table to the PMT of the TS.

## Description

### Technical Field

The present invention relates, in general, to broadcasting transceivers and, more particularly, to a broadcasting transceiver using a Personal Computer Memory Card International Association (PCMCIA) scrambler module that meets a Digital Video Broadcasting - Common Interface (or DVB-CI) standard, which suitably encrypts signals during a procedure for receiving broadcasts and retransmitting the broadcasts, thus enabling a conditional access system to be constructed.

### BACKGROUND OF THE INVENTION

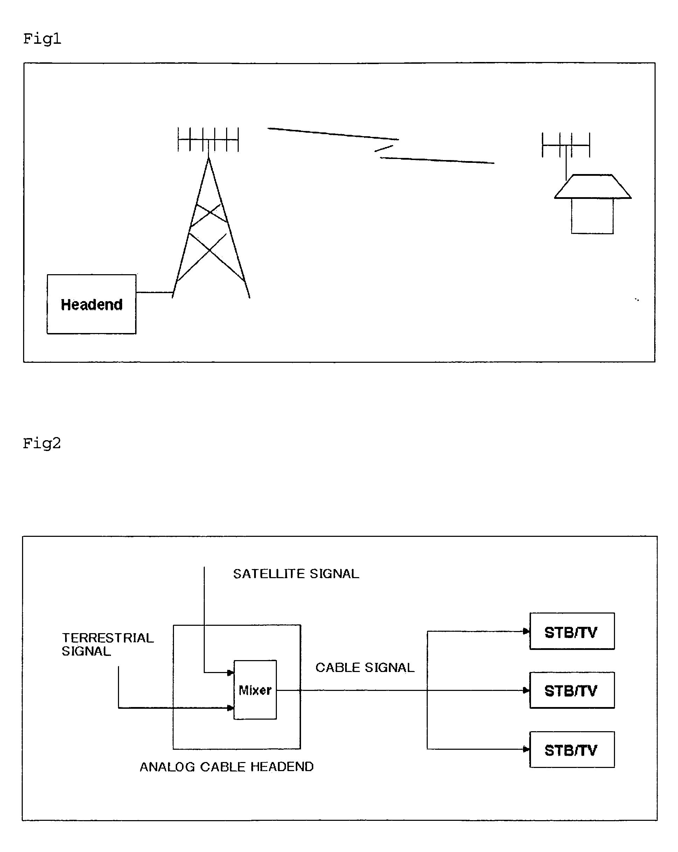

Generally, most people watch Television (TV) broadcasts. In order to enable broadcasts to be watched, a simple antenna is installed, so that terrestrial broadcasts can be watched. In most cases, terrestrial broadcasts can be watched without incurring a fee by installing antennas in respective houses. FIG. 1 is a distribution diagram showing such a terrestrial broadcasting service.

However, in the case of terrestrial waves, many fringe areas of poor reception are present and the number of channels is limited, so that in most areas, broadcasting services using cables have been provided. In this case, poor broadcast reception can be overcome and a large number of channels can be transmitted, thus enabling multiple channels to be watched. Such a cable broadcasting system is configured in the form of pay TV because cables must be directly installed in those houses. Individual households must subscribe to a cable broadcasting service and pay a predetermined amount of money monthly to get the service and watch cable broadcasts, and local cable broadcasters connect cables to respective houses and install terminals in the houses so that cable broadcasts can be watched. Most broadcasters before digital switchover have the form of small- and medium-scale local cable broadcasters having headend systems which are devices for receiving satellite broadcasts for small areas and re-transmitting the satellite broadcasts to subscribers via cable network. In many areas of the world, local cable broadcasters have provided broadcasting services in this form, and many households have used such cable broadcasting services. FIG. 2 is a distribution diagram showing a conventional cable broadcasting service using an analog method.

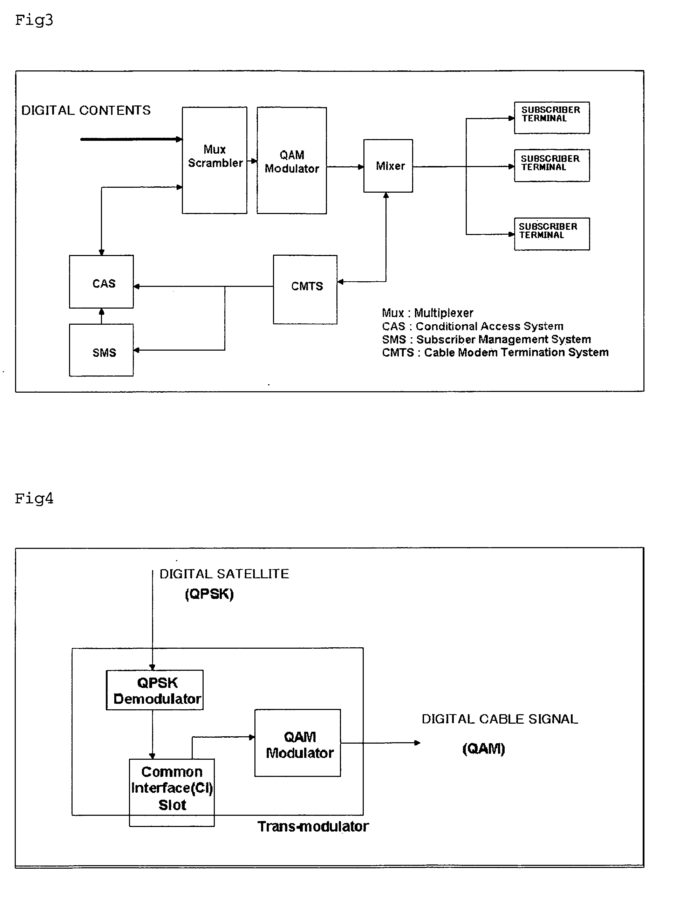

Meanwhile, as the transmission of broadcasts has changed to transmission based on a digital method, the scale of cable broadcasters has increased, so that services such as digital cable broadcasting, the Internet, or Voice over Internet Protocol (VoIP) have been provided based on a large-scale Digital Media Center (DMC). FIG. 3 is a schematic diagram showing a large-scale digital cable service.

However, in most areas all over the word, small-scale cable broadcasters based on respective areas still provide analog-based services, and have gradually prepared for the digital switchover.

Another type of broadcasting service is a satellite broadcasting service based on satellites. A satellite antenna is installed in each house, and broadcasts are directly received from the satellite and then watched. In this case, since TV signals are directly received from the satellite, poor broadcast reception can be overcome, and the multiple channel service is possible. Since satellite broadcasting is provided in the form of pay TV except for some public channels, broadcasts are scrambled, so that a Conditional Access System (CAS) enabling only persons who paid certain subscription fees to watch the broadcasts is used to provide broadcasts. However, when the beauty of urban areas or cities is taken into consideration, it is undesirable to install satellite antennas in respective houses, so that there are many cases where even in satellite broadcasting, signals are received from a satellite and are converted into cable signals, and the cable signals are then serviced via cables.

Most small-scale local cable broadcasters generally adopt the form of cable relaying in which broadcast content is received from a satellite and is then retransmitted without change over a cable network. Analog broadcasting has the form of simple cable relaying in which analog broadcasts are received via a satellite or terrestrial waves and only a carrier frequency is modulated, and in which modulated broadcasts are then provided over a cable network, so that the form of business of a relay operator is to collect monthly cable network fees from individual households.

As digital broadcasting is generalized, a transmodulator for modulating signals, which have been modulated using Quadrature Phase Shift Keying (QPSK) that is a digital satellite broadcasting standard, into signals based on Quadrature Amplitude Modulation (QAM) that is a digital cable standard is used in the headend of each local cable broadcaster, so that digital broadcast signals from the satellite are converted into cable signals and the cable signals are retransmitted. The form of business is very simple in such a way that cable network fees are collected in the same manner as is done for analog broadcasting.

FIG. 4 illustrates the structure of a typical transmodulator. When input QPSK satellite signals are scrambled, these must be descrambled and retransmitted, and thus a Digital Video Broadcasting-Common Interface (DVB-CI) slot is provided as shown in the drawing so that a Conditional Access Module (CAM) can be used.

When pay broadcasts other than free broadcasts are received from the satellite and transmitted to the cable network, the following methods may be provided:
1) A method of relaying satellite broadcasts without change and allowing a cable subscriber to personally subscribe to a satellite broadcaster, pay a subscription fee for charged content, receive a Set-Top Box (STB), a smart card, etc., which enable scrambled signals to be descrambled and watched, and watch satellite broadcasts on a cable network which is provided by local cable operator.
2) A method of allowing a cable operator to make a contract with a pay TV broadcaster (Satellite broadcaster), to descramble scrambled signals and retransmit the descrambled signals to the cable network, and to additionally collect subscription fees from subscribers.
   In this case, since clear signals (descrambled signals) are transferred up to the subscriber's end, the protection and management of content are not provided. That is, content subscription fees must be equally charged even to subscribers who do not desire to watch all channels.
3) A method of installing a separate conditional access system in the headend of a local cable broadcaster so as to solve the problem in 2), receiving pay TV content which has been provided via a satellite or another method, descrambling scrambled signals, reconstructing the contents, and re-scrambling and transmitting the reconstructed contents.

That is, each subscriber must have an STB and a smart card provided by a local cable operator. In this case, since a local cable headend requires expensive equipment such as a CAS system and a scrambler, this method is not suitable for a small-scale broadcaster having hundreds to thousands of subscribers due to the lack of economic efficiency. However, because such a broadcaster can create various packages using the CAS system and can provide different offers to each subscriber, the subscriber's demands can be satisfied.

In this way, methods that can be selected by small- and medium-scale local cable broadcasters are considerably limited with the digital switchover just before on. In the case of 1), a cable operator inevitably remains as a simple relay operator, and even in the case of 2), the cable operator functions only as a simple relay operator, so that various requirements of subscribers (differential prices for respective packages or the like) cannot be accepted, and thus subscribers may withdraw from the relevant service. In a market environment, various competitors such as Direct to Home (DTH) (that is, satellite broadcasting) or Internet Protocol TV (IPTV) are present, so that small-scale cable operator must satisfy requirements (various program packages) of subscribers so as to continuously maintain existing subscribers and acquire new subscribers.

In order to support this, the system such as that of 3) is required, but a system almost identical to the large-scale broadcaster system of FIG. 3 is required, and small- and medium-scale cable operator having difficulty in realizing economy of scale, as described above, needs a simpler system that can satisfy such requirements at much lower costs than those of the large-scale broadcasters.

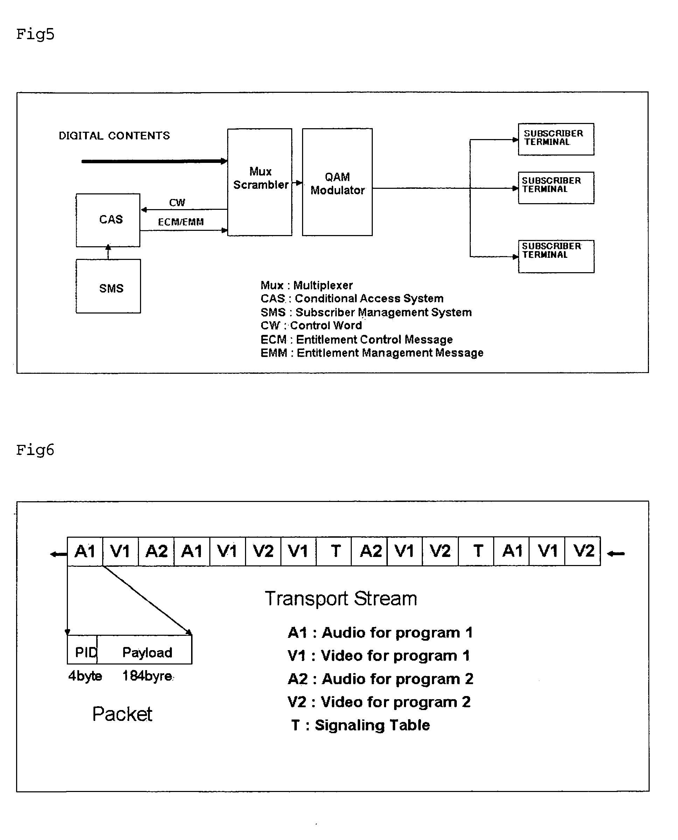

FIG. 5 is a schematic diagram showing a conventional small- and medium-scale pay digital cable broadcasting service.

As shown in FIG. 5, the basic structure of a transmitting headend includes a scrambler, a CAS server, a Subscriber Management System (SMS), etc. in addition to a multiplexer which is basic equipment for digital headend.

The CAS server functions to generate an Entitlement Control Message (ECM) table by encrypting a key used for scrambling (CW: control word), and to generate an Entitlement Management Message (EMM) table for controlling entitlement of each subscriber in compliance with a command from a subscriber management system.

The multiplexer and the scrambler insert the ECM and EMM tables generated by the CAS server into existing streams, and generate and transmit various signaling tables required for such multiplexing.
FIG. 6 is a diagram showing the structure of a transport stream used for digital broadcasting.
FIG. 7 is a diagram showing various types of signaling tables used for digital broadcasting. In the drawing, tables such as CAT, EMM, and ECM are used for CAS, and are generally generated and are added to streams when a channel is scrambled.

### DETAILED DESCRIPTION OF THE INVENTION

### Technical Problem

The present invention is intended to construct the above-described system for small cable headend where the transmodulator, which is widely used for signal conversion by small cable operators, is installed.

Present invention, as a PCMCIA type scrambler module which is inserted into a transmodulator's CI slot, provides a very simple and economical way of building conditional access system for small cable operators.

### Technical Solution

In order to accomplish the above objects, the present invention provides a transceiver, including a demodulator for demodulating input signals, the PCMCIA scrambler module being inserted into a CI slot and configured to scramble at least a part of broadcast signals in an MPEG2 Transport Stream (TS) among the demodulated signals, and a modulator for modulating the scrambled signals.

Preferably, the PCMCIA scrambler module may modify a Program Map Table (PMT) of the TS in which information about each broadcast signal is carried in order to add information related to a control word used for scrambling and conditional access processing. Preferably, the transceiver may further include a PCMCIA descrambler disposed between the modulator and the PCMCIA scrambler module for descrambling the signals when the input signals are scrambled.

The PCMCIA scrambler module includes a control word generator for generating a Control Word (CW) required for **scrambling**, a scrambler for scrambling the input Transport Stream (TS) using the CW, a Central Processing Unit (CPU) for processing externally generated configuration data and performing control such that the configuration information is loaded into the TS, an encryption engine and table generator for encrypting the CW and generating tables for respective broadcast signals based on the configuration information, and a packet modifier for modifying the PMT of the TS based on the encrypted CW and configuration information tables. The broadcasting transceiver may be either a transmodulator or a professional Integrated Receiver and Demodulator (IRD).

### Advantageous Effects

According to the above-described present invention, a broadcaster can define a plurality of channels as a specific package group using the technology of the present invention, can sell the specific package groups to subscribers, and can fulfill the subscribers' demands using differential payment systems for respective packages, thus enabling business to be conducted smoothly. That is, each subscriber can purchase a required package based on various prices and watch the desired channels based on his or her needs. The operators can offer various products to their customers (subscribers) preventing them from withdrawing from the service and creating more profit.

Since a pay TV service can be provided by simply inserting a PCMCIA scrambler module using the CI slot of an inexpensive transmodulator which is generally used by local cable operators to provide digital broadcasting services, costs required by a broadcaster to purchase separate expensive scramblers, multiplexers, or CAS systems can be greatly reduced, so that small- and medium-size broadcasters incapable of realizing economy of scale can also configure broadcast packages and can provide the broadcast packages to subscribers, thus meeting various users' requirements and maximizing profit in a digital broadcasting environment.

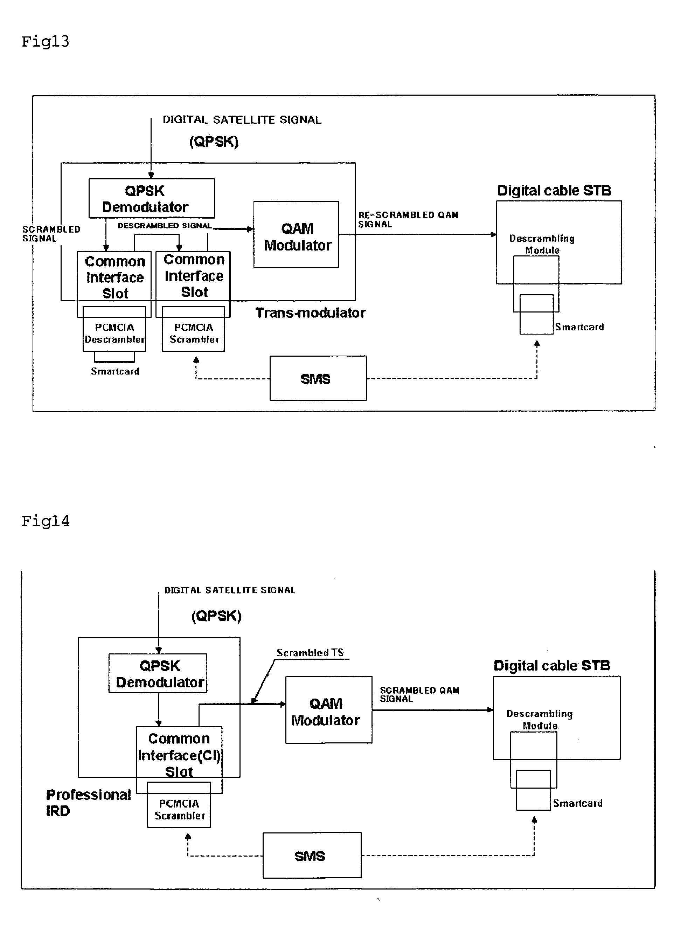

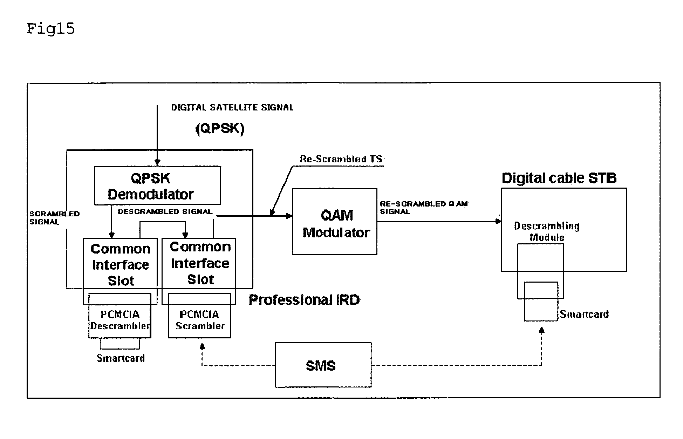

Further, the present technology can be implemented by using professional Integrated Receiver and Demodulator (IRD) (STB, that is, a special STB used by a headend to receive content), so that even in a large-scale broadcaster environment, streams can be scrambled using the DVB-CI slot of the IRD, thus enabling an economic conditional access system to be constructed (refer to FIGS. 14 and 15).

### BRIEF DESCRIPTION OF THE DRAWINGS

FIG. 1 is a distribution diagram showing a terrestrial broadcasting service;
FIG. 2 is a distribution diagram showing a conventional cable broadcasting service using an analog method;
FIG. 3 is a schematic diagram showing a large-scale digital cable service;
FIG. 4 is a diagram showing the structure of a typical transmodulator;
FIG. 5 is a schematic diagram showing a conventional small- and medium-scale pay digital cable broadcasting service;
FIG. 6 is a diagram showing the structure of a transport stream used for digital broadcasting;

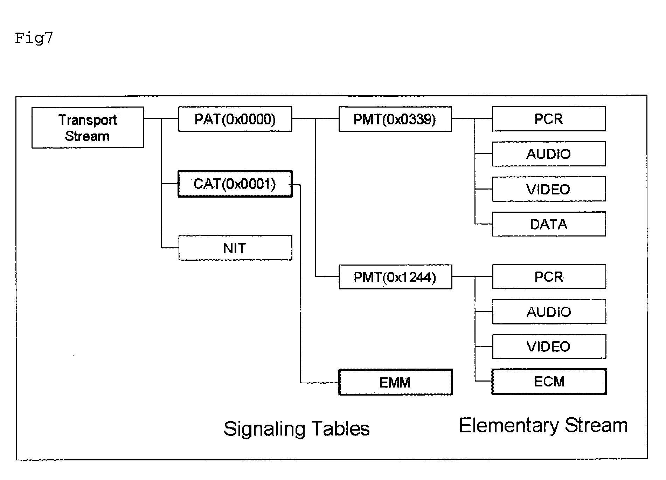

FIG. 7 is a diagram showing various types of signaling tables used for digital broadcasting;

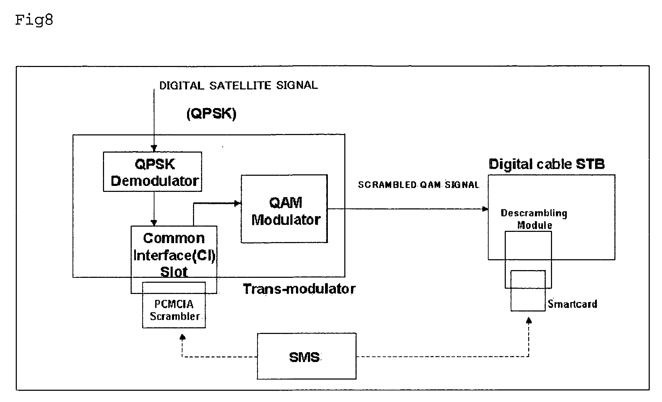

FIG. 8 is a diagram showing the outline of a pay digital cable broadcasting service in a transmodulator environment;

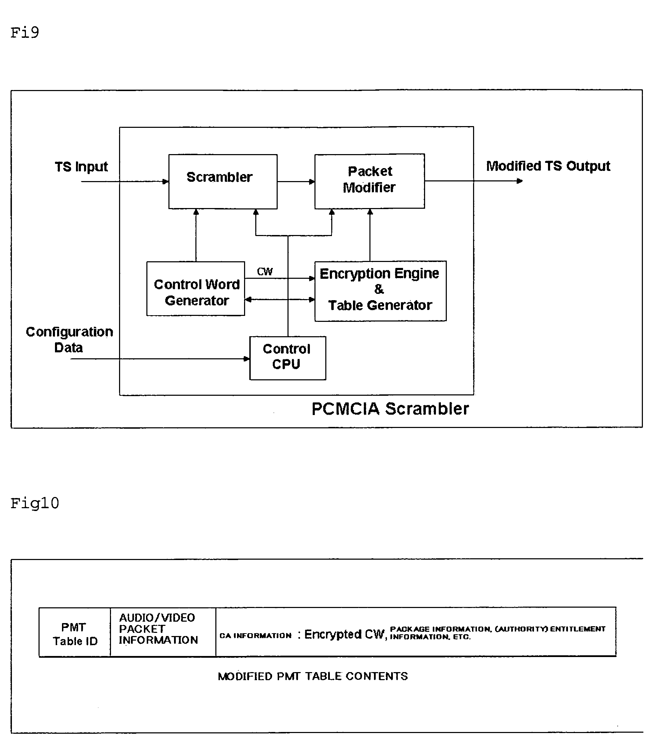

FIG. 9 is a diagram showing the construction of a PCMCIA scrambler module;
FIG. 10 is a diagram illustrating the contents of a finally generated Program Map Table (PMT);

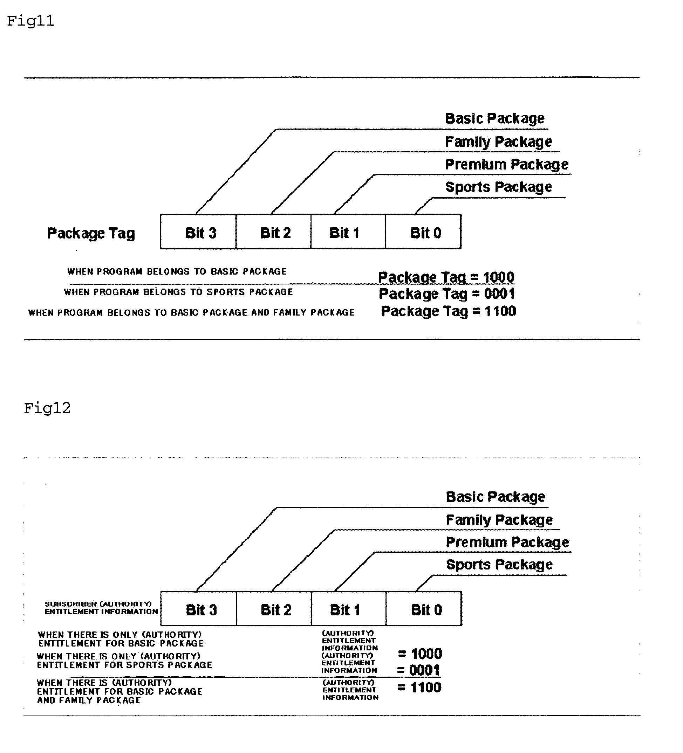

FIG. 11 is a diagram illustrating a method of implementing package information;
FIG. 12 is a diagram showing an example of subscriber entitlement information;
FIG. 13 is a diagram showing another embodiment of the present invention with the scrambled input signal;
FIG. 14 is a diagram showing a case where the present invention is applied to a professional IRD; and
FIG. 15 is a diagram showing another case where the present invention is applied to a professional IRD.

### Best Mode

A broadcasting transceiver according to the present invention will be described using a transmodulator as an example thereof.

In order to supply a system capable of providing a competitive service to small- and medium-scale cable broadcasters, initial investment costs must be low. In reality, constructing a typical scrambler and a typical CAS system is impossible from the standpoint of costs. Most small-scale broadcasters provide services in such a way as to convert digital broadcasts received from a satellite into a QAM format suitable for a cable environment by simply using a transmodulator. In this environment, an object of the present invention is to provide a method of allowing a broadcaster to configure desired packages, the method corresponding to requirements described in 3) given in the above description.

For this operation, if a transmodulator-type headend system currently being used can be used, the cheapest system can be constructed.

The present invention is intended 1) to scramble signals via a PCMCIA scrambler module by using the DVB-CI slot of a transmodulator which is generally provided so that a DVB-CI module can be used to descramble scrambled digital signals, 2) to add conditional access information on the signaling table which is present on the MPEG2-TS stream for sending required conditional access information, and 3) to allow a subscriber to watch desired broadcast contents according to the entitlement of the subscriber.

FIG. 8 is a diagram showing the outline of a pay digital cable broadcasting service in a transmodulator environment.

Hereinafter, the above construction will be described in detail.

A transmodulator includes a Quadrature Phase Shift Keying (QPSK) demodulator as a demodulator, and a Quadrature Amplitude Modulation (QAM) modulator as a modulator. Further, the transmodulator has one or two CI slot so that a Digital Video Broadcasting-Common Interface (DVB-CI) Conditional Access Module (CAM) can be used to descramble scrambled signals.

The QPSK demodulator demodulates QPSK-modulated satellite signals, and the demodulated signals are transferred to the CI slot, so that if a CAM (that is, a PCMCIA scrambler or the like) is inserted into the CI slot, the transmodulator is configured to transmit digital signals to the CAM, cause the digital signals to be **scrambled** by scrambling CAM.

The **scrambled** signals are QAM-modulated by the QAM modulator in the transmodulator, and then scrambled QAM signals are transmitted to the outside of the transmodulator.

The SMS is a subscriber management system for managing subscribers, and manages the package subscription states of respective subscribers, payment systems, and encryption of keys used by the transmodulator and by subscriber STBs.

In the present embodiment, a scrambling CAM is formed and used instead of using a descrambling CAM. When the scrambling CAM, that is, a PCMCIA scrambler, is inserted, the transmodulator sends signals (streams) to the CAM. In the scrambling CAM, programs in a stream are selectively scrambled by the internal scrambler. That is, all or part of the programs may be scrambled. In other words, the program(s) which is(are) configured as free is not scrambled, and only the program(s) which is(are) configured as pay is scrambled.

A key used at this time (CW; Control Word) must be encrypted and be then converted into an Entitlement Control Message (ECM) table, and the ECM table must be transferred to a receiving end as inserted into a stream. However, when new information is added to an existing stream, a bit rate or the like increases, so that complicated problems such as the addition of a separate memory buffer or the like occur. The present embodiment is configured such that, in order to solve these problems, a Program Map Table (PMT) previously used to send pieces of program information about respective programs to the receiving end is modified, and then encrypted key information is transferred via the PMT. Further, information about subscriber entitlement and conditional access is also encrypted and added to the existing PMT, or, alternatively, if a Packet Identifier (PID) that is not currently being used is present in a stream, it is converted into a PID for Entitlement Management Message (EMM), and thus a corresponding packet can be used. In this case, since there is no change in the bandwidth of each stream entering and leaving the CAM, the existing environment can be used without change.

FIG. 9 is a diagram showing the construction of a PCMCIA scrambler module in which the above functions is installed. A transport stream is implemented as shown in FIG. 6 such that a plurality of programs are divided and multiplexed into the form of packets and such that various types of information required by a terminal to watch programs are included in the form of signaling tables. Among the signaling tables of FIG. 7, a Program Allocation Table (PAT) includes information about all programs in the transport stream and information about packet Identifiers (PIDs) of respective Program Map Tables (PMTs) which have the detailed information about the respective programs. Each PMT has audio and video information about each program and other information about the program. In FIG. 9, Transport Stream (TS) input is a transport stream including all of these information, and a scrambler module (the scrambler of FIG. 9) scrambles the a selected program(s). A control word (CW) used at this time is generated and provided by a control word generator block. Further, this CW is sent to and encrypted by an encryption engine, and the encrypted CW is sent to a packet modifier, is inserted into the PMT of a relevant program, and is then transmitted. Whether to scramble a specific program is determined by a control CPU provided in the module on the basis of configuration information, and package configuration information about each program is also processed by the CPU on the basis of the configuration information. Accordingly when the control word of a relevant program is encrypted, the package configuration information is also included in the encrypted information. Entitlement information about each subscriber is also received by the control CPU from an external subscriber management system, and is sent to a table generator, so that a table is configured and is included in the PMT, or is transmitted as a separate packet. In FIG. 9, TS output is a signal including a scrambled stream, a modified PMT, etc.

FIG. 10 illustrates the contents of a finally generated PMT. Generally, in the case of a clear program, a PMT has only audio and video information or the like. Here, since the program is scrambled, Conditional Access (CA) information such as relevant CW information, other pieces of package information, and entitlement information is added. The terminal (STB) checks the PMT, extracts a required CW from the PMT, descrambles the stream and then enables watching the relevant program. During a procedure for decrypting the CW, control may be possible such that only a program for which entitlement has been assigned can be watched with reference to watching entitlement and package configuration information.

FIG. 11 illustrates a method of implementing package information. For each program, a relevant PMT is present, and the CA information of each PMT includes a package tag having package configuration information as shown in FIG. 11. For example, if it is assumed that a total of four packages are provided, the length of a package tag is 4 bits, wherein each bit may indicate a relevant package. When Program A belongs to a basic package, a tag value is indicated by the binary number '1000'. When program A belongs both to a basic package and to a family package, a tag value will be '1100'. This information is included in the CA information of the PMT and is then transmitted to the terminal. When the terminal decrypts CW included in the CA information, such program package information is decrypted together, and thus whether the terminal has entitlement to watch the program A can be determined.

The subscriber entitlement information is configured as shown in FIG. 12, and generated by SMS (Subscriber management System), and sent to the subscriber. Methods of sending subscriber entitlement information to the subscriber include a method of generating a pin code which is encrypted entitlement information, sending the pin code to the subscriber by mail or SMS(short message service) and allowing the subscriber to personally enter the pin code, and a method of sending generated PIN code on-line, causing generated PIN code to be included in the CA information of the PMT and transmitting resulting CA information. The subscriber entitlement information received by the subscriber's end is recorded and kept in the smartcard of the subscriber's end. In the case where the package information and the subscriber entitlement information have the configurations of FIGS. 11 and 12, if program A belongs only to a basic package and subscriber B only has entitlement to watch a sports package, the subscriber B cannot watch the program A because the program A does not belong to the sports package.

Meanwhile, FIG. 13 illustrates a modification of FIG. 8. This modification has construction identical to that of FIG. 8 except that one more CI slot is added to the construction of FIG. 8.

The embodiment of FIG. 13 assumes the case where QPSK digital satellite signals input to the transmodulator are scrambled. In this case, a local broadcaster must obtain authority to use content from a content provider. The content provider provides both a PCMCIA descrambler, which is a suitable descrambling CAM capable of descrambling scrambled signals, and a smartcard. The PCMCIA descrambler and the smartcard must be inserted into a first CI slot. The input QPSK digital satellite signals are restored into digital signals by the QPSK demodulator, and are then input to the first CI slot. The first CI slot descrambles the input signals using the CAM. The descrambled signals are input again to a second CI slot, and are then scrambled again using the scrambling CAM. At this case, package configuration information or the like is applied to the encryption, and subscriber management information or the like is added to the encrypted information. The signals encrypted in this way are transmitted to the outside through a QAM modulator. Other procedures are identical to those of the embodiment of FIG. 8.

The subscribers of the local operator that received such signal, insert the previously received smartcard into STB or the like, decrypt the encrypted signals, and then watch a relevant channel.

Although the above embodiment has been described based on the case of the transmodulator, the present invention is not limited to the environment of only the transmodulator. The present invention can also be applied to a professional Integrated Receiver and Demodulator (IRD). FIGS. 14 and 15 illustrate the cases where the present invention is applied to the professional IRD.

That is, the professional IRD is a device having only the QPSK demodulator and the CI slot of the transmodulator of FIG. 8 or the like. Therefore, the output signal of the professional IRD is scrambled TS, which is converted into cable signal by an external QAM modulator, and the cable signal is transmitted to subscribers.

## Claims

1. A broadcasting transceiver, comprising:
a demodulator for demodulating input broadcast signals;
a Personal Computer Memory Card International Association (PCMCIA) scrambler module having a Digital Video Broadcasting - Common Interface (or DVB-CI) standard, the PCMCIA scrambler module being inserted into a CI slot and configured to scramble at least a part of broadcast signals included in an MPEG2 Transport Stream (TS), among the demodulated broadcast signals; and
a modulator for modulating the scrambled broadcast signals.

2. The broadcasting transceiver according to claim 1, wherein the PCMCIA scrambler module modifies a Program Map Table (PMT) of the TS in which information about each broadcast signal is transferred, and adds information related to a control word used for scrambling and conditional access.

3. The broadcasting transceiver according to claim 1 or 2, further comprising:
a PCMCIA descrambler disposed between the demodulator and the PCMCIA scrambler module and inserted into the CI slot, the PCMCIA descrambler descrambles scrambled signals when the input broadcast signals are scrambled.

4. The broadcasting transceiver according to claim 1 or 2, wherein the PCMCIA scrambler module comprises:
a control word generator for generating a Control Word (CW) required for scrambling;
a scrambler for scrambling input Transport Stream (TS) using the CW;
a control Central Processing Unit (CPU) for receiving externally generated configuration information required to prescribe conditional access information of each channel, and performing control such that the configuration information is applied into the TS;
an encryption engine and table generator for encrypting the CW, and generating tables for respective broadcast signals based on the configuration information; and
a packet modifier for modifying a Program Map Table (PMT) of the TS, received from the scrambler, based on the encrypted CW and configuration information tables.

5. The broadcasting transceiver according to claim 1 or 2, wherein the broadcasting transceiver is a transmodulator.

6. The broadcasting transceiver according to claim 1 or 2, wherein the broadcasting transceiver is a professional Integrated Receiver and Demodulator (IRD).

7. A Personal Computer Memory Card International Association (PCMCIA) scrambler, comprising:
a control word generator for generating a Control Word (CW) required for scrambling;
a scrambler for scrambling input Transport Stream (TS) using the CW;
a control Central Processing Unit (CPU) for receiving externally generated configuration information required to prescribe conditional access information of each channel, and performing control such that the configuration information is applied to the TS;
an encryption engine and table generator for encrypting the CW, and generating tables for respective broadcast signals based on the configuration information; and
a packet modifier for modifying a Program Map Table (PMT) of the TS, received from the scrambler, based on the encrypted CW and configuration information tables.
